# EUROPÄISCHE PATENTANMELDUNG

(11) **EP 2 532 462 A1**
(43) Veröffentlichungstag der Anmeldung: **12.12.2012**
(21) Anmeldenummer: 12163882.9
(22) Anmeldetag: 12.04.2012
(51) Int. Cl.: B23D 49/16, B23D 51/20

(54) **Motorisch angetriebene Handsäge**

(30) Priorität: 09.06.2011 DE 102011077259
(71) Anmelder: ROBERT BOSCH GMBH, 70442 Stuttgart (DE)
(72) Erfinder: Koncsik, Tamas, 3793 Sajoecseg (HU); Zador, Endre, 3780 Edeleny (HU)

(57) **Zusammenfassung**

Eine motorisch angetriebene Handsäge weist eine von einem Antriebsmotor (2) oszillierend angetriebene Hubstange (7) auf, an der ein Sägeblatt (9) befestigbar ist. Die Hubstange (7) ist in einem Führungsteil (13) gelagert, das einen ersten und einen zweiten Führungsabschnitt (19,20) aufweist, wobei über ein Einstellelement die Relativposition zwischen Hubstange (7) und Führungsteil (13) so einstellbar ist, dass die Hubstange (7) wahlweise im ersten oder im zweiten Führungsabschnitt (19,20) gelagert bzw. geführt ist.

## Beschreibung

Die Erfindung bezieht sich auf eine motorisch angetriebene Handsäge, insbesondere eine Fuchsschwanzsäge, nach dem Oberbegriff des Anspruches 1.

### Stand der Technik

In der DE 10 2005 009 467 A1 wird eine als Fuchsschwanzsäge ausgeführte Elektrohandsäge beschrieben, deren Antriebsmotor eine Hubstange mit einem Sägeblatt, das an einer Hubstange gehalten ist, oszillierend antreibt. Die Hubstange ist im Gehäuse der Elektrohandsäge axial verschieblich gelagert und über Kopplungsmittel kinematisch mit einer Welle des Antriebsmotors zur Übertragung der Antriebsbewegung gekoppelt. Im Betrieb führt das Sägeblatt eine axiale, hin und her gehende Sägebewegung aus.

### Offenbarung der Erfindung

Der Erfindung liegt die Aufgabe zugrunde, mit einfachen konstruktiven Maßnahmen eine motorisch angetriebene Handsäge mit oszillierend antreibbarem Sägeblatt so auszubilden, dass ein effizienteres Sägen möglich ist. Es sollen insbesondere auch nachgiebige Objekte wie zum Beispiel dünne Äste oder Zweige zuverlässig durchtrennt werden können.

Diese Aufgabe wird erfindungsgemäß mit den Merkmalen des Anspruches 1 gelöst. Die Unteransprüche geben zweckmäßige Weiterbildungen an.

Die Handsäge weist einen Antriebsmotor auf, üblicherweise einen elektrischen Antriebsmotor, dessen Arbeitsbewegung über eine Koppeleinrichtung auf eine Hubstange übertragen wird, welche verstellbar gelagert ist und im Betrieb eine oszillierende, hin und her gehende Bewegung ausführt. An der Hubstange ist ein Sägeblatt befestigbar, das die gleiche Bewegung wie die Hubstange ausführt. Die Hubstange führt zweckmäßigerweise als Grundbewegung eine axiale bzw. translatorische Arbeitsbewegung aus, der bedarfsweise eine zusätzliche Arbeitsbewegung überlagerbar ist. Vorteilhafterweise handelt es sich bei der zusätzlichen Arbeitsbewegung um eine Pendelbewegung um eine Querachse, die quer zur translatorischen bzw. axialen Arbeitsbewegung gerichtet ist, so dass das mit der Hubstange verbundene Sägeblatt zusätzlich zur axialen Arbeitsbewegung auch eine Pendelbewegung um die Querachse ausführt und dementsprechend sich bei der Bearbeitung oszillierend auf und ab bewegt. Diese überlagerte Arbeitsbewegung in Form einer Pendelbewegung verbessert die Effizienz bei der Sägebearbeitung von nachgiebigen Objekten wie zum Beispiel Zweigen und kleinen Ästen. Vorteilhafterweise ist die Pendelbewegung zuschaltbar ausgeführt, so dass die Pendelbewegung auch nur in den Fällen zum Einsatz kommt, in denen mit der Pendelbewegung eine Effizienzsteigerung erreicht werden kann. Bei harten, nicht nachgiebigen Objekten, welche durchsägt werden sollen, ist es dagegen zweckmäßig, die überlagerte Pendelbewegung abzuschalten und allein über die axiale, translatorisch hin und her gehende Sägebewegung das Werkstück zu bearbeiten.

Bei der erfindungsgemäßen Handsäge ist die Hubstange in einem Führungsteil geführt, das mit einem ersten Führungsabschnitt und einem zweiten Führungsabschnitt versehen ist, wobei die beiden Führungsabschnitte zur Führung und Lagerung der Hubstange dienen. Über ein Einstellelement kann die Relativposition zwischen der Hubstange und dem Führungsteil so verändert werden, dass die Hubstange wahlweise entweder im ersten oder im zweiten Führungsabschnitt gelagert und geführt ist.

Diese Ausführung hat den Vorteil, dass die Bewegung der Hubstange und damit auch des Sägeblatts in einfacher Weise über die Position der Hubstange im ersten oder zweiten Führungsabschnitt beeinflusst werden kann. Die Führungsabschnitte unterscheiden sich voneinander, so dass bei einer Bewegung der Hubstange entweder im ersten Führungsabschnitt oder zweiten Führungsabschnitt je nach Form und/oder Ausrichtung des Führungsabschnittes eine unterschiedliche Arbeitsbewegung der Hubstange bzw. des Sägeblatts erreicht wird. Auf diese Weise ist es insbesondere möglich, die Grund-Arbeitsbewegung durch Lagerung der Hubstange im ersten Führungsabschnitt zu bewirken, indem der erste Führungsabschnitt geradlinig ausgebildet ist und sich koaxial zur Längsachse der Hubstange erstreckt. Eine überlagerte Pendelbewegung kann dadurch erreicht werden, dass die Hubstange durch Betätigung über das Einstellelement in den zweiten Führungsabschnitt verstellt wird, der beispielsweise gekrümmt ausgebildet ist, so dass die Hubstange während ihrer Arbeitsbewegung der Krümmung im zweiten Führungsabschnitt folgen muss und dementsprechend eine axial, hin und her gehende translatorische Arbeitsbewegung und eine überlagerte Pendelbewegung ausführt. Der gekrümmt ausgeführte Führungsabschnitt ist beispielsweise teilkreisförmig ausgebildet.

Gemäß einer weiteren zweckmäßigen Ausführung gehen der erste und der zweite Führungsabschnitt ineinander über. Die Führungsabschnitte sind insbesondere in Achsrichtung der Hubstange bzw. des Sägeblattes hintereinander liegend angeordnet, so dass zum Verändern der Relativposition zwischen Hubstange und Führungsteil eine axiale Verschiebebewegung erforderlich ist. Innerhalb des jeweiligen Führungsabschnittes kann die Hubstange im Rahmen der Arbeitsbewegung sich oszillierend hin und her bewegen.

Die Verstellbewegung zwischen Hubstange und Führungsteil erfolgt mittels des Einstellelementes, bei dessen Betätigung die Hubstange wahlweise im ersten oder im zweiten Führungsabschnitt gelagert wird. Das Einstellelement betätigt zweckmäßigerweise das Führungsteil, so dass während der Verstellbewegung die Hubstange einschließlich Sägeblatt ortsfest verbleibt und nur das Führungsteil verstellt wird. Das Einstellelement ist zweckmäßigerweise fest mit dem Führungsteil verbunden. Grundsätzlich in Betracht kommt aber auch eine Ausführung, bei der über das Einstellelement die Hubstange gegenüber einem ortsfesten Führungsteil verstellt wird.

Gemäß einer weiteren zweckmäßigen Ausführung sind die Führungsabschnitte jeweils als eine Führungsnut ausgebildet, in die ein Führungsstift eingreift, der in dem jeweiligen Führungsabschnitt verstellbar und mit der Hubstange verbunden ist. Der Führungsstift bewegt sich innerhalb der nutförmigen Führungsabschnitte, wobei insbesondere in der Ausführung mit ineinander übergehenden Führungsabschnitten der Stift über eine Betätigung des Einstellelementes durch einfache axiale Verstellung von einem in den anderen Führungsabschnitt bewegt werden kann. Der Führungsstift erstreckt sich beispielsweise in Querrichtung, also quer zur Längsachse von Hubstange und Sägeblatt, wobei es aus Symmetriegründen zweckmäßig sein kann, dass diagonal gegenüberliegend an der Hubstange zwei Führungsstifte angeordnet sind, die jeweils in korrespondierende nutförmige Führungsabschnitte im Führungsteil einragen, das die Hubstange umschließt.

Grundsätzlich in Betracht kommt auch eine Ausführung mit nutförmigen Führungsabschnitten an der Hubstange bzw. einem mit der Hubstange verbundenen Bauteil und mindestens einem Führungsstift am Führungsteil.

Damit die Hubstange die gewünschte Pendelschiebebewegung ausführen kann, ist die Hubstange zweckmäßigerweise in einem Pendelschiebelager aufgenommen, welches sowohl eine axiale Verschiebebewegung als auch eine Pendelbewegung um eine Querachse ermöglicht. Über das Pendelschiebelager ist die Hubstange mit den vorgenannten Bewegungsmöglichkeiten im Gehäuse der Handsäge gelagert. Über die Befestigung mit der Hubstange führt auch das Sägeblatt eine entsprechende Verschiebe- und Pendelbewegung aus. Die Verschiebebewegung stellt die Grundbewegung dar, der die Pendelbewegung optional als zusätzliche Arbeitsbewegung überlagerbar ist.

Im kinematischen Übertragungsweg zwischen dem Antriebsmotor und der Hubstange befindet sich ein Antriebshebel, der an der Hubstange angreift und insbesondere an der Hubstange schwenkbar gelagert ist. Gemäß einer vorteilhaften Ausführung wird die Arbeitsbewegung der Motorwelle des Antriebsmotors über ein Getriebe auf eine Abtriebswelle übertragen, an der der Antriebshebel in der Weise gehalten ist, dass bei der Drehbewegung der Abtriebswelle dem Antriebshebel eine axiale, oszillierende Arbeitsbewegung aufgeprägt wird, welche über die Kopplung mit der Hubstange auf diese übertragen wird.

Weitere Vorteile und zweckmäßige Ausführungen sind den weiteren Ansprüchen, der Figurenbeschreibung und den Zeichnungen zu entnehmen. Es zeigen:
- Fig. 1: eine motorisch angetriebene Handsäge, mit einem Sägeblatt, das an einer Hubstange befestigt ist, wobei die Hubstange in einem Führungsteil verschieblich gelagert ist, dargestellt in der axial zurückgezogenen Position der axialen Grundbewegung,
- Fig. 2: eine Fig. 1 entsprechende Darstellung der Handsäge, jedoch in der nach vorne ausgelenkten Position von Hubstange und Sägeblatt,
- Fig. 3 und 4: den Fig. 1 und 2 entsprechende Darstellungen, jedoch mit überlagerter Pendelbewegung,
- Fig. 5: in perspektivischer Einzelansicht ein Führungsteil zur Lagerung der Hubstange,
- Fig. 6: das Führungsteil mit Hubstange in Explosionsdarstellung,
- Fig. 7: ein Pendelschiebelager zur Lagerung der Hubstange in Explosionsdarstellung.

In den Figuren sind gleiche Bauteile mit gleichen Bezugszeichen versehen.

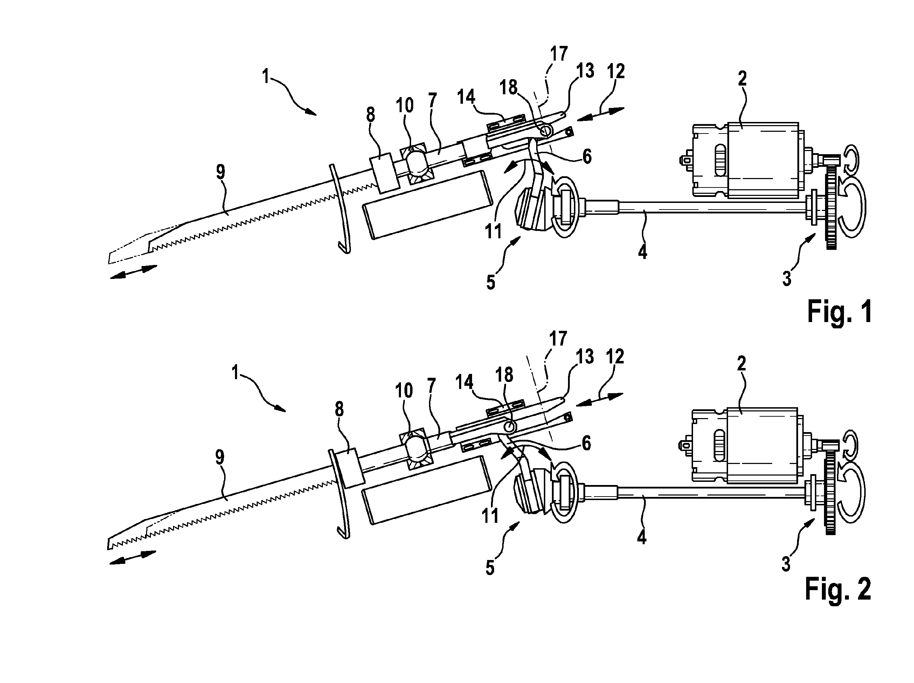

In den Fig. 1 bis 4 ist eine als Fuchsschwanzsäge ausgeführte, motorisch angetriebene Handsäge 1 dargestellt, die einen elektrischen Antriebsmotor 2 aufweist, dessen Motorwelle über ein Getriebe 3 eine achsparallel angeordnete Abtriebswelle 4 antreibt. An ihrem dem Getriebe 3 gegenüberliegenden Ende ist die Abtriebswelle 4 mit einer Koppeleinrichtung 5 versehen, über die die Rotationsbewegung der Abtriebswelle 4 in eine oszillierende axiale Arbeitsbewegung des Sägeblatts 9 umgesetzt wird. Die Koppeleinrichtung 5 umfasst einen Antriebshebel 6, der gelenkig mit einer Hubstange 7 gekoppelt ist, an der über eine Befestigungseinrichtung 8 das Sägeblatt 9 befestigt ist. Der Antriebshebel 6 führt, angetrieben durch die Rotationsbewegung der Abtriebswelle 4, eine Pendelbewegung gemäß Doppelpfeil 11 aus, die über die Kopplung des Antriebshebels 6 mit der Hubstange 7 über ein Drehgelenk in die axiale bzw. translatorische, oszillierende Verschiebe- bzw. Arbeitsbewegung gemäß Doppelpfeil 12 der Hubstange 7 umgesetzt wird. Aufgrund der Kopplung mit der Hubstange 7 über die Befestigungseinrichtung 8 übt auch das Sägeblatt 9 eine entsprechende, translatorischoszillierende Arbeitsbewegung aus. Diese axiale Arbeitsbewegung stellt die Grundbewegung dar, die von der Hubstange 7 und dem Sägeblatt 9 nach dem Einschalten des Antriebsmotors 2 immer ausgeführt wird.

Die Fig. 1 und 2 sind Darstellungen der Hubsäge 1 mit der Hubstange 7 und dem Sägeblatt 9 bei der Ausführung der translatorischen Grund-Arbeitsbewegung ohne überlagerte Pendelbewegung. Fig. 1 stellt hierbei die Hubstange 7 und das Sägeblatt 9 in der maximal zurückgezogenen Position und Fig. 2 Hubstange 7 und Sägeblatt 9 in der maximal nach vorne ausgelenkten Position dar.

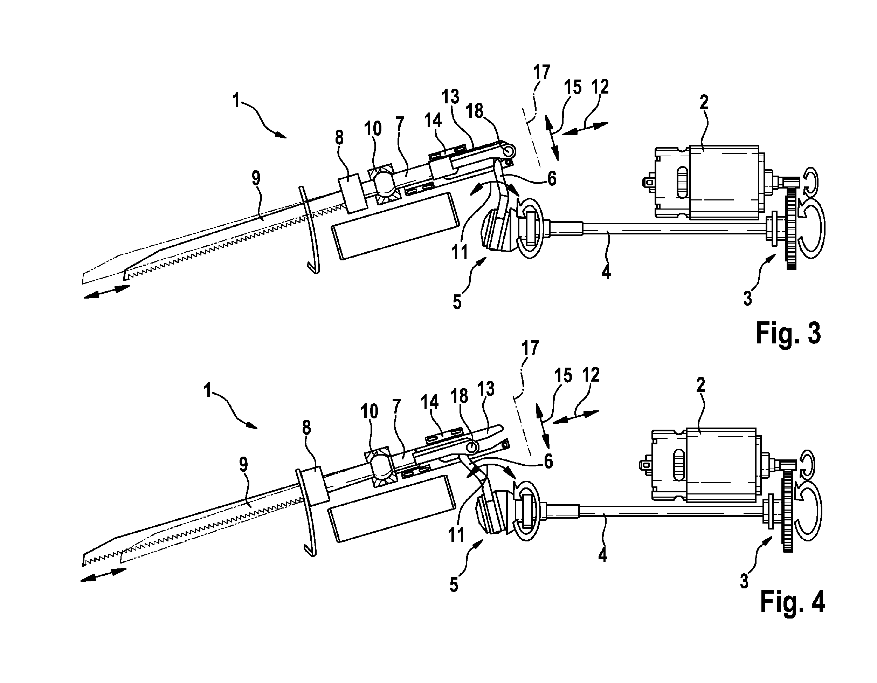

Die Fig. 3 und 4 zeigen dagegen die Hubsäge 1 während des Betriebs mit überlagerter Pendelbewegung der Hubstange 7 und des Sägeblatts 9 gemäß Doppelpfeil 15. Die Pendelbewegung kommt zu der Grund-Arbeitsbewegung mit axial-oszillierendem Antrieb hinzu. Durch die Überlagerung von axialer Verschiebebewegung und Pendelbewegung um eine Querachse durch das Pendelschiebelager 10, an dem die Hubstange 7 gegenüber dem Gehäuse der Handsäge axial verschieblich sowie um die Querachse drehend bzw. pendelnd gelagert ist, erhält man im Bereich der Spitze des Sägeblatts 9 die mit Doppelpfeil 16 angegebene oszillierende Bewegung in der Ebene mit translatorischer Komponente entlang der Längsachse von Hubstange 7 bzw. Sägeblatt 9 und rotatorischer Komponente um die Querachse durch das Pendelschiebelager 10.

Die Hubstange 7 ist in einem Führungsteil 13 gelagert und geführt, welches verschieblich im Gehäuse angeordnet ist und über ein Einstellelement 14, das fest mit dem Führungsteil 13 verbunden ist, bezogen auf das Gehäuse der Handsäge 1 in Richtung der Längsachse von Hubstange 7 bzw. Sägeblatt 9 verschieblich angeordnet ist. In den Fig. 1 und 2, die die Betriebsstellung der Handsäge ohne Pendelfunktion darstellen, befindet sich das Führungsteil 13 in einer axial zurückgezogenen Position, in der eine virtuelle, gehäusefeste Achse 17 im zurückgezogenen Zustand der Hubstange 7 einen Führungsstift 18 schneidet, der fest mit der Hubstange 7 verbunden ist und im Führungsteil 13 axial verschieblich geführt ist. Während des laufenden Betriebs verbleibt das Führungsteil 13 in seiner über das Einstellelement 14 eingestellten Position bezüglich des Gehäuses der Handsäge 1. Die Hubstange 7 kann über den Führungsstift 18 in Achsrichtung sich im Führungsteil 13 bewegen.

Um die Pendelfunktion zu aktivieren, wird das Führungsteil 13 über das Einstellelement 14 im Gehäuse nach vorne geschoben (Fig. 3, 4). Diese vorgeschobene Position behält das Führungsteil 13 während der Betätigung der Hubstange 7 bzw. des Sägeblatts 9 bei. Die vorgeschobene Position ist anhand der virtuellen Achse 17 im Vergleich mit dem Führungsstift 18 in der axial zurückgezogenen Position gemäß Fig. 3 zu erkennen.

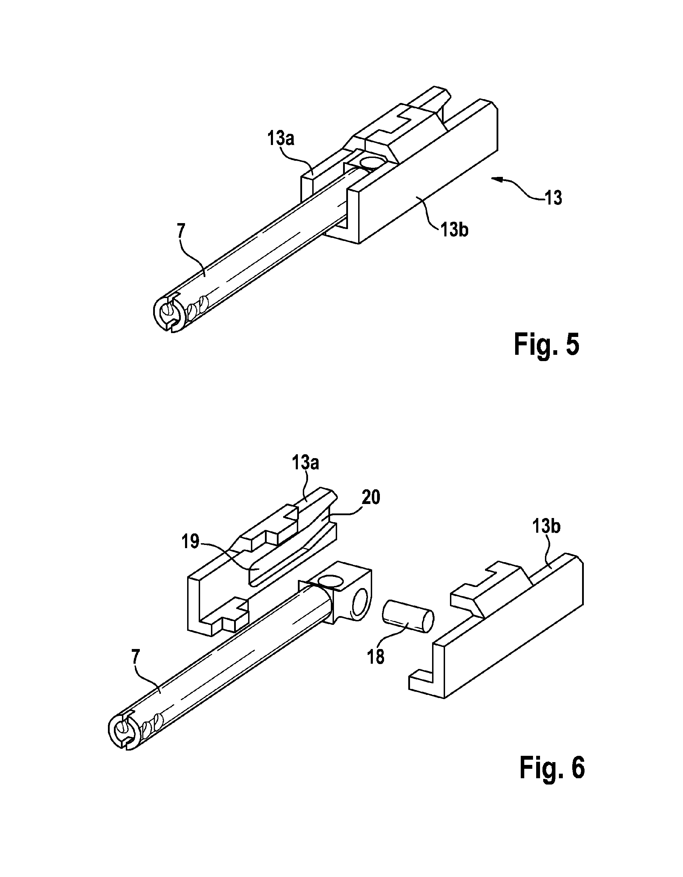

Wie den Fig. 5 und 6 zu entnehmen, ist das Führungsteil 13 zweiteilig aufgebaut und umfasst zwei Führungsteilhälften 13a und 13b, die im montierten Zustand die Hubstange 7 aufnehmen und diese lagern. An der Innenseite weist jede Führungsteilhälfte 13a, 13b zwei Führungsabschnitte 19 und 20 auf, die als Nut ausgebildet sind und in die jeweils ein Führungsstift 18 eingreift. An dem rückwärtigen Ende der Hubstange 7 sind diagonal gegenüberliegend zwei Führungsstifte 18 befestigt, die jeweils in nutförmige Führungsabschnitte 19, 20 an den gegenüberliegenden Führungsteilhälften 13a bzw. 13b einragen.

Der vorne liegende Führungsabschnitt 19 ist geradlinig ausgeführt und der Grund-Arbeitsbewegung mit axial-oszillatorischem Hub gemäß den Fig. 1 und 2 zugeordnet. Der Führungsstift 18 an der Hubstange 7 bewegt sich während der abgeschalteten Pendelbewegung ausschließlich in dem ersten, geradlinigen Führungsabschnitt 19. Durch die Geradlinigkeit ist sichergestellt, dass die Hubstange 7 sowie das Sägeblatt 9 nur eine axiale bzw. translatorische Arbeitsbewegung ausführen.

Sobald durch Verschieben des Führungsteils 13 die überlagerte Pendelbewegung zugeschaltet wird, gelangt der Führungsstift 18 in den Bereich des zweiten Führungsabschnittes 20, der gekrümmt ausgeführt ist. Der zweite Führungsabschnitt 20 schließt sich direkt an den ersten Führungsabschnitt 19 an, beide Führungsabschnitte bilden eine gemeinsame, durchgehende Nut, so dass der darin gelagerte Führungsstift 18 bei einer Verschiebung des Führungsteils 13 ohne Weiteres zwischen erstem und zweitem Führungsabschnitt 19 bzw. 20 verschoben werden kann. Sobald der elektrische Antriebsmotor 2 eingeschaltet wird, bewegt sich der Führungsstift 18 innerhalb des gekrümmten, nutförmigen Führungsabschnittes 20, wobei aufgrund der Krümmung die Hubstange 7 eine der axialen Verschiebebewegung überlagerte Pendelbewegung um die Querachse durch das Pendelschiebelager 10 ausführt.

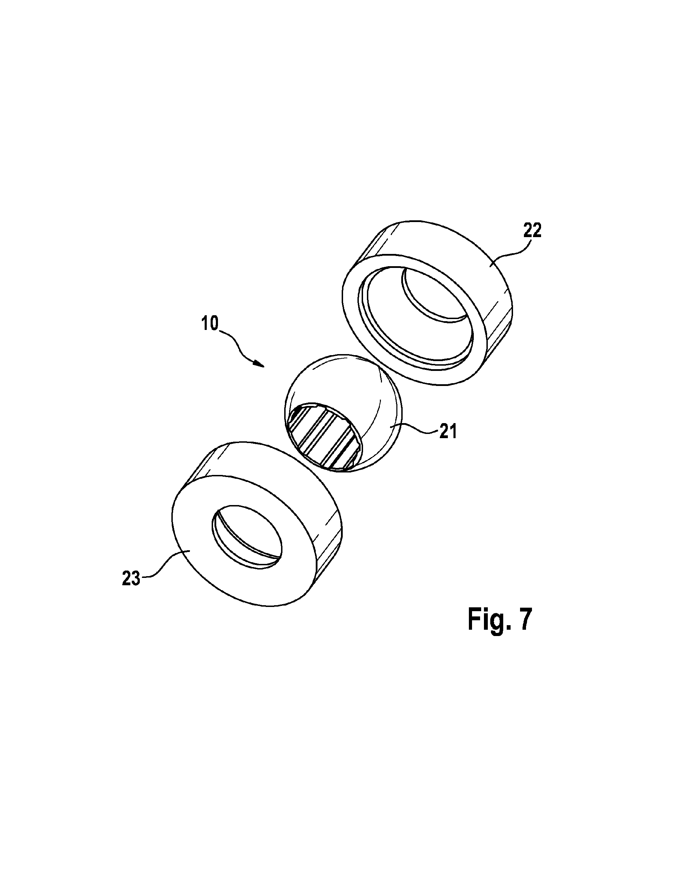

Wie Fig. 7 zu entnehmen, besteht das Pendelschiebelager 10 aus einem Kugelkopf 21 und zwei Lagerschalen 22 und 23, in denen der Kugelkopf 21 schwenkbar gelagert ist. Die beiden Lagerschalen 22 und 23 sind gehäusefest angeordnet. Alle Bauteile, also die beiden Lagerschalen 22 und 23 sowie der Kugelkopf 21, weisen eine zentrale Ausnehmung auf, durch die im montierten Zustand die Hubstange 7 hindurchragt.

Im Betrieb der Handsäge übt die Hubstange 7 eine axiale Verschiebebewegung aus und wird durch die Ausnehmung in den Bauteilen 21 bis 23 axial hin und her geschoben. Sobald die Pendelbewegung überlagert wird, verschwenkt der Kugelkopf 21 in den Lagerschalen 22, 23 entsprechend der Pendelbewegung der Hubstange.

## Patentansprüche

1. Motorisch angetriebene Handsäge, insbesondere Fuchsschwanzsäge, mit einer von einem Antriebsmotor (2) oszillierend antreibbaren Hubstange (7), an der ein Sägeblatt (9) befestigbar ist, **dadurch gekennzeichnet, dass** die Hubstange (7) in einem Führungsteil (13) geführt ist, das einen ersten und einen zweiten Führungsabschnitt (19, 20) zur Führung und Lagerung der Hubstange (7) aufweist, wobei über ein Einstellelement (14) die Relativposition zwischen Hubstange (7) und Führungsteil (13) so einstellbar ist, dass die Hubstange (7) wahlweise im ersten oder im zweiten Führungsabschnitt (19, 20) gelagert bzw. geführt ist.

2. Handsäge nach Anspruch 1, **dadurch gekennzeichnet, dass** das Führungsteil (13) verstellbar an der Handsäge (1) gelagert und durch Betätigung über das Einstellelement (14) zu verstellen ist.

3. Handsäge nach Anspruch 2, **dadurch gekennzeichnet, dass** das Führungsteil (13) verschiebbar an der Handsäge (1) gelagert ist.

4. Handsäge nach einem der Ansprüche 1 bis 3, **dadurch gekennzeichnet, dass** das Einstellelement (14) fest mit dem Führungsteil (13) verbunden ist.

5. Handsäge nach einem der Ansprüche 1 bis 4, **dadurch gekennzeichnet, dass** der erste Führungsabschnitt (19) geradlinig ausgebildet ist.

6. Handsäge nach einem der Ansprüche 1 bis 5, **dadurch gekennzeichnet, dass** der zweite Führungsabschnitt (20) gekrümmt ausgebildet ist.

7. Handsäge nach einem der Ansprüche 1 bis 6, **dadurch gekennzeichnet, dass** der erste und der zweite Führungsabschnitt (19, 20) ineinander übergehen.

8. Handsäge nach einem der Ansprüche 1 bis 7, **dadurch gekennzeichnet, dass** der erste und der zweite Führungsabschnitt (19, 20) jeweils als Führungsnut ausgebildet sind, in die ein mit der Hubstange (7) verbundener Führungsstift (18) eingreift.

9. Handsäge nach einem der Ansprüche 1 bis 8, **dadurch gekennzeichnet, dass** an der Hubstange (7) zur Übertragung der Antriebsbewegung des Antriebsmotors (2) ein Antriebshebel (6) angreift.

10. Handsäge nach einem der Ansprüche 1 bis 9, **dadurch gekennzeichnet, dass** die Hubstange (7) in einem Pendelschiebelager (10) aufgenommen ist, welches eine Verschiebebewegung und eine Pendelbewegung der Hubstange (7) erlaubt.
